# EUROPEAN PATENT APPLICATION

(11) **EP 4 772 993 A1**
(43) Date of publication of application: **08.07.2026**
(21) Application number: 25202491.4
(22) Date of filing: 16.09.2025
(51) Int. Cl.: G06F 3/14, G09G 5/377, G09G 5/14

(54) **METHOD AND ELECTRONIC DEVICE FOR OVERLAPPING A PLURALITY OF IMAGE LAYERS**

(30) Priority: 02.01.2025 CN 202510006699
(71) Applicant: MediaTek Singapore Pte Ltd, Singapore 138628 (SG)
(72) Inventor: PENG, YinBo, Chengdu (CN); MA, ShiTian, Chengdu (CN); JING, Qi, Chengdu (CN)
(74) Representative: Hoefer & Partner Patentanwälte mbB

(57) **Abstract**

A method of overlapping a plurality of image layers is provided. The image layers are received from an application (S100). Processing information is collected (S102). The processing information includes a first image format of an overlapped image output by a graphics processor and a dirty region of the image layers. It is determined whether to enable the local refresh function of the graphics processor (S104). An overlay process to be used for the image layers is set when it is determined to enable the local refresh function of the graphics processor (S106). The first image format of the overlapped image is changed to a second image format (S108). The data size of the second image format is less than that of the first image format. The overlay process is performed on the image layers to output the overlapped image with the second image format (S110). The dirty region of the overlapped image is refreshed (S112).

## Description

### CROSS REFERENCE TO RELATED APPLICATIONS

This Application claims the benefit of China Patent Application No. 202510006699.0, filed on January 2, 2025, the entirety of which are incorporated by reference herein.

### BACKGROUND OF THE INVENTION

### Field of the Invention

The present invention relates to an electronic device, and, in particular, it relates to a method and an electronic device to overlap a plurality of image layers.

### Description of the Related Art

In the existing display process employed in mobile phones, layer transparency has no practical effects in the particular application scenes, and the output format includes an alpha channel, which uses a lot of memory and bandwidth resources. The alpha format carries information about layer transparency.

In some particular application scenes where some layer content is updated, all layers are overlaid again, which is a waste of memory resources. In multi-screen scenes displaying the same content, layers are overlaid again and again, which wastes computing resources.

### BRIEF SUMMARY OF THE INVENTION

A method and an electronic device according to the invention are defined in the independent claims. The dependent claims define preferred embodiments thereof. An embodiment of the present invention provides a method to overlap a plurality of image layers. The method includes the following steps. The image layers are received from an application. Processing information is collected. The processing information includes a first image format of an overlapped image output by a graphics processor and a dirty region of the image layers. It is determined whether to enable the local refresh function of the graphics processor. An overlay process to be used for the image layers is set when it is determined to enable the local refresh function of the graphics processor. The first image format of the overlapped image is changed to a second image format. The data size of the second image format is less than that of the first image format. The overlay process is performed on the image layers to output the overlapped image with the second image format. The dirty region of the overlapped image is refreshed.

According to the method described above, preferably the processing information includes display information and layer information of the image layers. The step of determining whether to enable the local refresh function of the graphics processor preferably includes the following steps. It is determined whether the layer information of the image layers of the previous N frames has changed. N is an integer greater than or equal to 2. It is determined whether the dirty region occupies a smaller area than the threshold percentage in the image layers.

According to the method described above, preferably the display information includes a display count and a display size. The layer information of the image layers preferably includes a layer count, a layer size, the dirty region, a layer alpha, a layer position, and a layer name.

According to the method described above, preferably the first image format of the overlapped image includes red, green, blue, and alpha. Preferably, the second image format of the overlapped image includes red, green, and blue.

The method preferably further includes the following step. The graphics processor is enabled to perform the overlay process on the image layers when the overlay process is set.

The method preferably further includes the following steps. The overlapped image with the second image format is stored in a memory through a write direct memory access (WDMA) component. The overlapped image with the second image format is read from the memory through a read direct memory access (RDMA) component.

According to the method described above, preferably the threshold percentage is 20%.

The method preferably further includes the following step. The local refresh function of the graphics processor is enabled when the layer information of the image layers of the previous N frames has not changed and when the dirty region occupies a smaller area than the threshold percentage in the image layers, N is an integer greater than or equal to 2.

The method preferably further includes the following step. The graphics processor is enabled to perform the overlay process on the image layers by setting a layer composition type as a client.

According to the method described above, the step of refreshing the dirty region of the overlapped image preferably includes the following step. The dirty region of the overlapped image is refreshed until the layer information of the image layers of the previous N frames has changed or the dirty region occupies a larger area than the threshold percentage in the image layers, N is an integer greater than or equal to 2.

An embodiment of the present invention provides an electronic device. The electronic device includes a graphics processor and a processor. The processor is electrically connected to the graphics processor. The processor receives a plurality of image layers from an application, collects processing information, and determines whether to enable the local refresh function of the graphics processor. The processing information includes a first image format of an overlapped image output by the graphics processor and a dirty region of the image layers. The graphics processor sets an overlay process to be used for the image layers when it is determined to enable the local refresh function of the graphics processor, and changes the first image format of the overlapped image to a second image format. The data size of the second image format is less than that of the first image format. The graphics processor performs the overlay process on the image layers to output the overlapped image with the second image format, and refreshes the dirty region of the overlapped image.

According to the electronic device described above, preferably the processing information includes display information and layer information of the image layers. The processor preferably determines whether the layer information of the image layers of the previous N frames has changed, N is an integer greater than or equal to 2, and preferably determines whether the dirty region occupies a smaller area than the threshold percentage in the image layers.

According to the electronic device described above, the display information preferably includes a display count and a display size. The layer information of the image layers preferably includes a layer count, a layer size, the dirty region, a layer alpha, a layer position, and a layer name.

According to the electronic device described above, preferably the first image format of the overlapped image includes red, green, blue, and alpha. Preferably, the second image format of the overlapped image includes red, green, and blue.

According to the electronic device described above, preferably the processor enables the graphics processor to perform the overlay process on the image layers when the overlay process is set .

The electronic device preferably further includes a memory, a write direct memory access (WDMA) component, and/or a read direct memory access (RDMA) component. The WDMA is electrically connected between the graphics processor and the memory, and stores the overlapped image with the second image format in the memory. The RDMA component is electrically connected to the memory, and reads the overlapped image with the second image format from the memory.

According to the electronic device described above, preferably the threshold percentage is 20%.

According to the electronic device described above, preferably the processor enables the local refresh function of the graphics processor when the layer information of the image layers of the previous N frames has not changed and when the dirty region occupies a smaller area than the threshold percentage in the image layers, N is an integer greater than or equal to 2.

According to the electronic device described above, preferably the processor enables the graphics processor to perform the overlay process on the image layers by setting a layer composition type as a client.

According to the electronic device described above, preferably the graphics processor refreshes the dirty region of the overlapped image until the layer information of the image layers of the previous N frames has changed or the dirty region occupies a larger area than the threshold percentage in the image layers, N is an integer greater than or equal to 2.

### BRIEF DESCRIPTION OF THE DRAWINGS

The present invention can be more fully understood by reading the subsequent detailed description and examples with references made to the accompanying drawings, wherein:
FIG. 1 shows a flow chart of a method to overlap a plurality of image layers in accordance with some embodiments of the present invention;
FIG. 2 shows a detail flow chart of step S104 of the method to overlap the image layers in FIG. 1 in accordance with some embodiments of the present invention;
FIG. 3 shows a flow chart of a method to overlap the image layers in accordance with some embodiments of the present invention;
FIG. 4 shows a schematic diagram of displaying a picture-in-picture (PIP) video playback scene in accordance with some embodiments of the present invention;
FIG. 5 shows a schematic diagram of a data path of the method to overlap the image layers in FIG. 1 in accordance with some embodiments of the present invention; and
FIG. 6 shows a schematic diagram of an electronic device 600 in accordance with some embodiments of the present invention.

### DETAILED DESCRIPTION OF THE INVENTION

In order to make the above purposes, features, and advantages of some embodiments of the present invention more comprehensible, the following is a detailed description in conjunction with the accompanying drawing.

Certain terms are used throughout the description and following claims to refer to particular components. As one skilled in the art will understand, electronic equipment manufacturers may refer to a component by different names. This document does not intend to distinguish between components that differ in name but not function. It is understood that the words "comprise", "have" and "include" are used in an open-ended fashion, and thus should be interpreted to mean "include, but not limited to...". Thus, when the terms "comprise", "have" or "include" used in the present invention are used to indicate the existence of specific technical features, values, method steps, operations, units or components. However, it does not exclude the possibility that more technical features, numerical values, method steps, work processes, units, components, or any combination of the above can be added.

The directional terms used throughout the description and following claims, such as: "on", "up", "above", "down", "below", "front", "rear", "back", "left", "right", etc., are only directions referring to the drawings. Therefore, the directional terms are used for explaining and not used for limiting the present invention. Regarding the drawings, the drawings show the general characteristics of methods, structures, or materials used in specific embodiments. However, the drawings should not be construed as defining or limiting the scope or properties encompassed by these embodiments. For example, for clarity, the relative size, thickness, and position of each layer, each area, or each structure may be reduced or enlarged.

When the corresponding component such as layer or area is referred to as being "on another component", it may be directly on this other component, or other components may exist between them. On the other hand, when the component is referred to as being "directly on another component (or the variant thereof)", there is no component between them. Furthermore, when the corresponding component is referred to as being "on another component", the corresponding component and the other component have a disposition relationship along a top-view/vertical direction, the corresponding component may be below or above the other component, and the disposition relationship along the top-view/vertical direction is determined by the orientation of the device.

It should be understood that when a component or layer is referred to as being "connected to" another component or layer, it can be directly connected to this other component or layer, or intervening components or layers may be present. In contrast, when a component is referred to as being "directly connected to" another component or layer, there are no intervening components or layers present.

The electrical connection or coupling described in this disclosure may refer to direct connection or indirect connection. In the case of direct connection, the endpoints of the components on the two circuits are directly connected or connected to each other by a conductor line segment, while in the case of indirect connection, there are switches, diodes, capacitors, inductors, resistors, other suitable components, or a combination of the above components between the endpoints of the components on the two circuits, but the intermediate component is not limited thereto.

The words "first", "second", and "third" are used to describe components. They are not used to indicate the priority order of or advance relationship, but only to distinguish components with the same name.

It should be noted that the technical features in different embodiments described in the following can be replaced, recombined, or mixed with one another to constitute another embodiment without departing from the scope of the present invention.

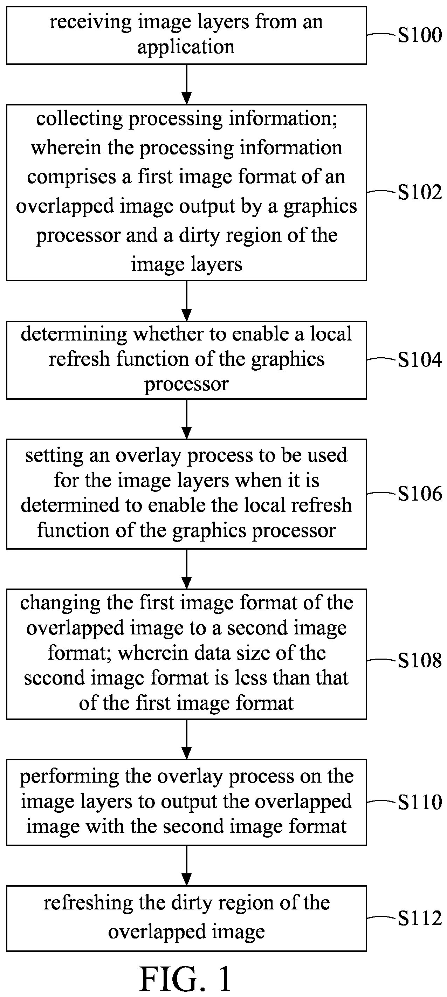

FIG. 1 shows a flow chart of a method to overlap a plurality of image layers in accordance with some embodiments of the present invention. Preferably, the method to overlap the image layers of the present invention is applied to an electronic device. The electronic device may be a smart phone, a tablet, or a laptop, but the present invention is not limited thereto. The electronic device may include a processor and a graphics processor, but the present invention is not limited thereto. As shown in FIG. 1, the method to overlap the image layers of the present invention includes the following steps. The image layers are received from an application (step S 100). Processing information is collected. The processing information includes a first image format of an overlapped image output by a graphics processor and a dirty region of the image layers (step S102). It is determined whether to enable the local refresh function of the graphics processor (step S104). An overlay process to be used for the image layers is set when it is determined to enable the local refresh function of the graphics processor (step S106). That is, when the local refresh function is enabled, an overlay process is set to be used for the image layers. If it is determined that the local refresh function of the graphic processor should not be enabled, an original display process is used. The first image format of the overlapped image is changed to a second image format when the overlay process is set to be used for the image layers. The data size of the second image format is less than that of the first image format (step S108). The overlay process is performed on the image layers to output the overlapped image with the second image format (step S110). The dirty region of the overlapped image is refreshed (step S112).

In step S100, the application generates the image layers based on operations from a user. In step S102, the processing information may include display information and layer information of the image layers. The display information may include a display count and a display size, but the present invention is not limited thereto. The display count refers to the number of screens connected to the electronic device. This includes scenarios involving screen mirroring and screen recording, which are considered virtual multi-screen environments. The layer information of the image layers may include a layer count, a layer size, the dirty region, a layer alpha (the alpha value of each pixel determines the degree of transparency, usually ranging from 0 to 255), a layer position, and a layer name, but the present invention is not limited thereto. The dirty region refers to the part of a view or window that needs to be redrawn. The concept of dirty regions is used to optimize drawing performance by avoiding unnecessary full-screen redraws, thereby improving the responsiveness and efficiency of an application. When a part of a view changes (such as content updates, position changes or size adjustments), the system marks these changes as dirty regions. Only these dirty regions will be redrawn, while unchanged parts will no be redrawn. This mechanism can significantly reduce the overhead of drawing operations. Furthermore, in step S102, the first image format of the overlapped image may include red (R), green (G), blue (B), and alpha (A). Preferably, the data size of the first image format of the overlapped image may be 32 bits. The overlapped image output by the graphics processor is initially generated with the first image format before step S 104 is performed.

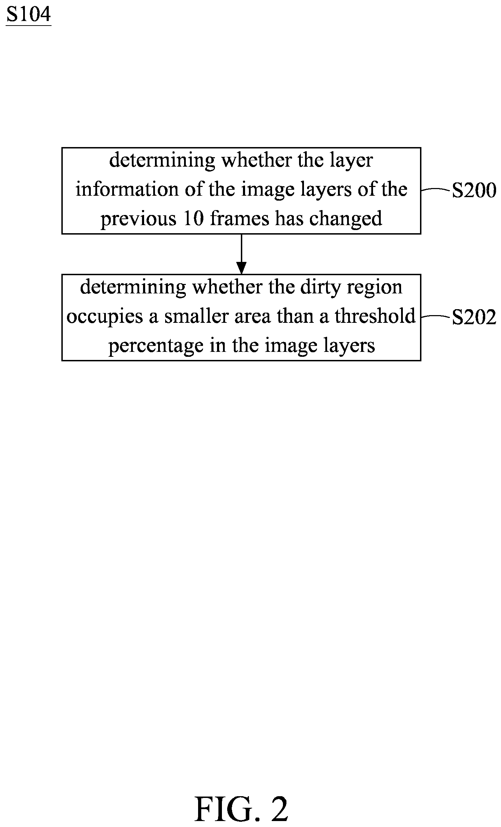

FIG. 2 shows a detail flow chart of step S104 of the method to overlap the image layers in FIG. 1 in accordance with some embodiments of the present invention. In step S104, the method to overlap the image layers of the present invention includes the following steps. It is determined whether the layer information of the image layers of the previous N frames has changed (step S200), N could be any integer greater than or equal to 2. The upper limit of N can be flexibly set according to system requirements (such as memory and processing power). The present invention has no special restrictions on this. For example, N is equal to 10. It is determined whether the dirty region occupies a smaller area than the threshold percentage in the image layers (step S202). Preferably, the method to overlap the image layers of the present invention enables the local refresh function of the graphics processor when the layer information of the image layers of the previous 10 frames has not changed and when the dirty region occupies a smaller area than the threshold percentage in the image layers. Preferably, the threshold percentage may be 20%, but the present invention is not limited thereto.

Preferably, after step S 104 is performed, the method to overlap the image layers of the present invention sets an overlay process to be used for the image layers when it is determined to enable the local refresh function of the graphics processor in step S106. The method to overlap the image layers of the present invention enables the graphics processor to perform the overlay process on the image layers when the overlay process is set to be used for the image layers . Preferably, the method to overlap the image layers of the present invention enables the graphics processor to perform the overlay process on the image layers by setting a layer composition type as a client. After the layer composition is set to the client, the graphics processor is able to perform the overlay process on the image layers to generate the overlapped image.

Please refer back to FIG. 1. In step S108, the first image format of the overlapped image is changed to the second image format. The second image format of the overlapped image may include red (R), green (G), and blue (B). Alpha (layer transparency of the image layers) is removed from the overlapped imaged with the second image format. Preferably, the data size of the second image format of the overlapped image may be 24 bits. Since the data size of the overlapped image is reduced from 32 bits to 24 bits, million instructions per second (MIPS) of the electronic device executing the method of the present invention is reduced, thereby reducing bandwidth usage and memory usage.

In step S110, the graphics processor performs the overlay process on the image layers from the application to output the overlapped image with the second image format. Next, in step S112, the graphics processor refreshes the dirty region of the overlapped image. In detail, the graphics processor refreshes the dirty region of the overlapped image until the layer information of the image layers of the previous N frames has changed. N could be any integer greater than or equal to 2. The upper limit of N can be flexibly set according to system requirements (such as memory and processing power). The present invention has no special restrictions on this. For example, N is equal to 10. Alternatively, the graphics processor refreshes the dirty region of the overlapped image until the dirty region occupies a larger area than the threshold percentage in the image layers.

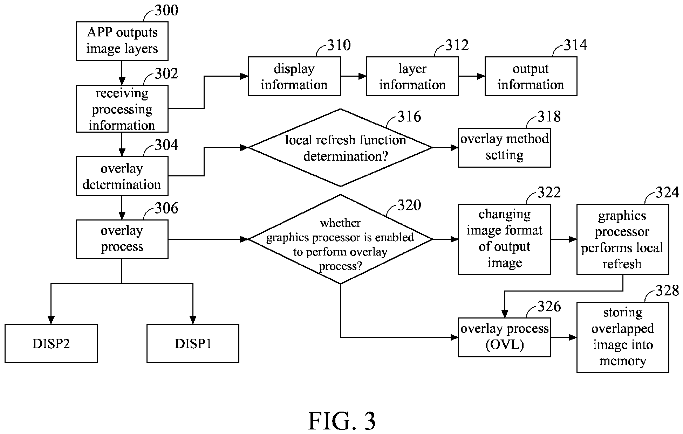

FIG. 3 shows a flow chart of a method to overlap the image layers in accordance with some embodiments of the present invention. As shown in FIG. 3, in step S300, the application outputs a plurality of image layers. Then, in step 302, the method to overlap the image layers of the present invention receives processing information. In detail, the processing information includes display information 310, layer information 312, and output information 314. Preferably, the display information 310 includes a display count and a display size. The layer information 312 includes a layer count, a layer size, the dirty region, a layer alpha, a layer position, and a layer name. The output information 314 includes the image format of an overlapped image output by a graphics processor.

Next, in step 304, overlay determination is performed. For example, in step 316, the method to overlap the image layers of the present invention determines whether to enable the local refresh function of the graphics processor. If the local refresh function of the graphics processor is enabled, the method to overlap the image layers of the present invention sets an overlay method. For example, the method to overlap the image layers of the present invention enables the graphics processor to perform the overlay process on the image layers when the overlay process is set to be used for the image layers, the method to overlap the image layers of the present invention enables the graphics processor to perform the overlay process on the image layers by setting a layer composition type as a client.

After that, in step 306, an overlay process is performed. For example, in step 320, the method to overlap the image layers of the present invention determines whether the graphics processor is enabled to perform the overlay process. If the graphics processor is enabled to perform the overlay process, in step 322, the graphics processor changes the image format of an output image, that is, the overlapped image, from the first format to the second format. The data size of the second format is less than that of the first format. In step 324, the graphics processor performs local refresh. In step 326, the graphics processor performs overlay process (OVL) to generate the overlapped image. Finally, in step 328, the graphics processor stores the overlapped image into a memory. Preferably, the memory may be a dynamic random access memory (DRAM), but the present invention is not limited thereto.

Preferably, if the graphics processor is not enabled to perform the overlay process, the method to overlap the image layers of the present invention may directly perform overlay process without the aid of the graphics processor. Preferably, the overlapped imaged stored in the memory may be sent to a first display DISP1 and/or a second display DISP2. Preferably, the first display DISP1 may be an internal display, the second display DISP2 may be an external display, but the present invention is not limited thereto.

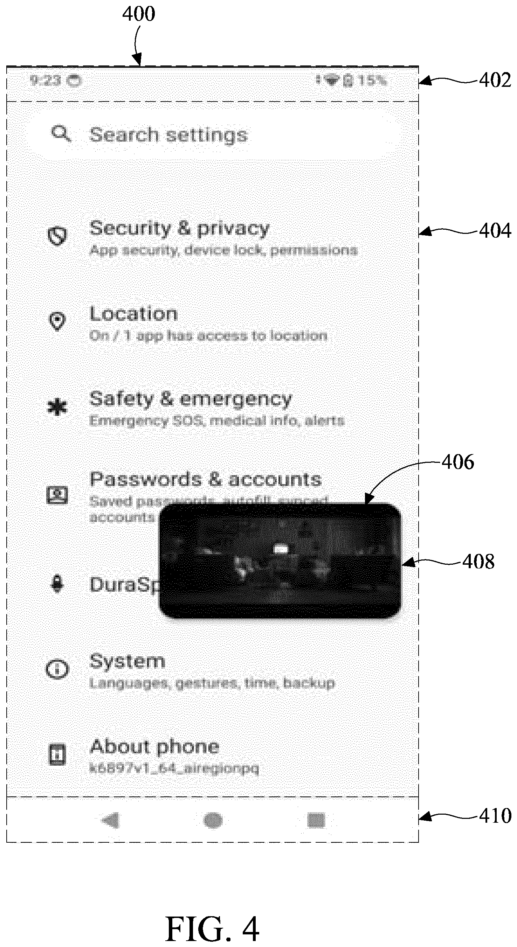

FIG. 4 shows a schematic diagram of displaying a picture-in-picture (PIP) video playback scene in accordance with some embodiments of the present invention. For example, a user interface 400 includes a status bar 402, a settings page 404, a PIP activity layer 406, a PIP video layer 408, and a navigation bar 410. Preferably, in the embodiments of FIG. 4, coordinates of the status bar 402 is (0, 0, 1080, 78). That is, the coordinates (0, 0) is the upper-left point of the status bar 402, and the coordinates (1080, 78) is the lower-right point of the status bar 402. Coordinates of the settings page 404 is (0, 0, 1080, 2400). That is, the coordinates (0, 0) is the upper-left point of the settings page 404, and the coordinates (1080, 2400) is the lower-right point of the settings page 404. The status bar 402 is overlapped with the settings page 404. The status bar 402 is above the settings page 404. Preferably, the refresh rate of the status bar 402 may be one frame per second. The refresh rate of the settings page 404 may be zero frame per second.

Coordinates of the PIP activity layer 406 is (48, 698, 1032, 1254). That is, the coordinates (48, 698) is the upper-left point of the PIP activity layer 406, and the coordinates (1032, 1254) is the lower-right point of the PIP activity layer 406. Coordinates of the PIP video layer 408 is (48, 766, 1032, 1185). That is, the coordinates (48, 7668) is the upper-left point of the PIP video layer 408, and the coordinates (1032, 1185) is the lower-right point of the PIP video layer 408. The PIP activity layer 406 is overlapped with the PIP video layer 408. The PIP video layer 408 is above the PIP activity layer 406. Preferably, the PIP video layer 408 is the dirty region in step S102 in FIG. 1 and step S202 in FIG. 2. In step S110 in FIG. 1, the graphics processor refreshes the PIP video layer 408 30 frames per second. The refresh rate of the PIP activity layer 406 may be zero frame per second.

Coordinates of the navigation bar 410 is (0, 2256, 1080, 2400). That is, the coordinates (0, 2256) is the upper-left point of the navigation bar 410, and the coordinates (1080, 2400) is the lower-right point of the navigation bar 410. The refresh rate of the navigation bar 410 may be zero per second. Preferably, in the embodiments of FIG. 4, the layer size of the PIP video layer 408 is equal to 864*368. The size of the user interface 400 is equal to the 1080*2400. Since the layer information of the status bar 402, the settings page 404, the PIP activity layer 406, the PIP video layer 408, and the navigation bar 410 of the previous N frames is not changed, N could be any integer greater than or equal to 2. The upper limit of N can be flexibly set according to system requirements (such as memory and processing power). The present invention has no special restrictions on this. For example, N is equal to 10. The PIP video layer 408 occupies a smaller area than 20% (that is, (864*368) / (1080*2400) = 12.3%) of the user interface 400, the graphics processor keeps refreshing the PIP video layer 408.

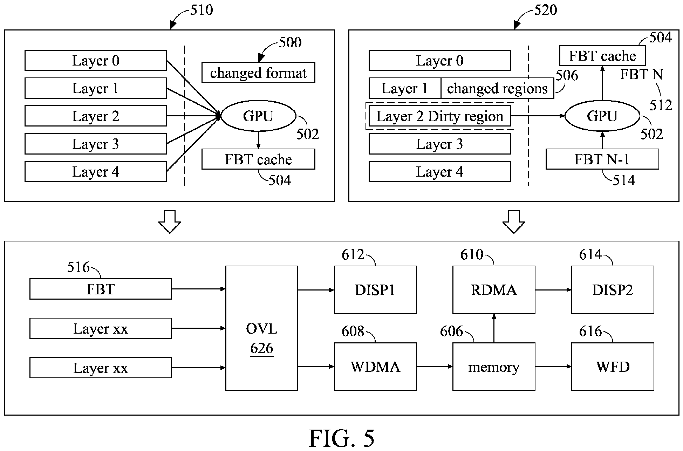

FIG. 5 shows a schematic diagram of a data path of the method to overlap the image layers in FIG. 1 in accordance with some embodiments of the present invention. As shown in FIG. 5, a frame 520 is right next and later than a frame 510. In frame 510, the method to overlap the image layers of the present invention receives 5 layers, such as layer 0, layer 1, layer 2, layer 3, and layer 4, from the application. After the local refresh function of a graphics processor (GPU) 502 is enabled, in step 500, the method to overlap the image layers of the present invention enables the graphics processor 502 to change the image format of its output image from the first image format to the second image format. Preferably, the data size of the second image format is less than that of the first image format. Next, the graphics processor 502 then stores the layers 0~5 with a (N-1)th frame buffer target (FBT) 514 into a FBT cache 504.

After that, in frame 510, an FBT 516 includes the (N-1)th FBT 514 received in frame 510. The graphics processor 502 performs an overlay process (OVL) 626 on the layers 0~5 and the (N-1)th FBT 514 (that is the dirty region in frame 510) to obtain an overlapped image in frame 510. In a scene that a first display (DISP1) 612, a second display (DISP2) 614, and a third display (WFD) 616 are showing the same image, the overlapped image in frame 510 is sent to a first display (DISP1) 612, a write direct memory access (WDMA) component 608 stores the overlapped image with the second image format in frame 510 in a memory 606, and a read direct memory access (RDMA) 610 reads the overlapped image with the second image format in frame 510 from the memory 606 for the second display 614. The third display 616 is able to read the overlapped image with the second image format in frame 510 directly through communication protocols.

In frame 520, since the local refresh function of the graphics processor 502 is enabled, the graphics processor 502 performs dirty regions changing (step 506) to change layer 2, which is the dirty region of the image layers, based on FBT N 152 received in frame 520. For example, the graphics processor 502 receives the FBT N-1 514 in frame 510. In frame 520, since the local refresh function of the graphics processor 502 is still enabled, the graphics processor 502 replaces the FBT N-1 514 by the Nth FBT 512, and stores the layers 0~5 with the Nth FBT 512 in the FBT cache 504.

After that, the FBT 516 includes the FBT N 514 received in frame 520. The graphics processor 502 performs the overlay process 626 on the layers 0~5 and the Nth FBT 512 (that is the dirty region in frame 520) to obtain an overlapped image in frame 520. In a scene that the first display 612, the second display 614, and the third display 616 are showing the same image, the overlapped image in frame 520 is sent to the first display 612, the WDMA component 608 stores the overlapped image with the second image format in frame 520 in a memory 606, and the RDMA 610 reads the overlapped image with the second image format in frame 520 from the memory 606 for the second display 614. The third display 616 is able to read the overlapped image with the second image format in frame 520 directly through communication protocols.

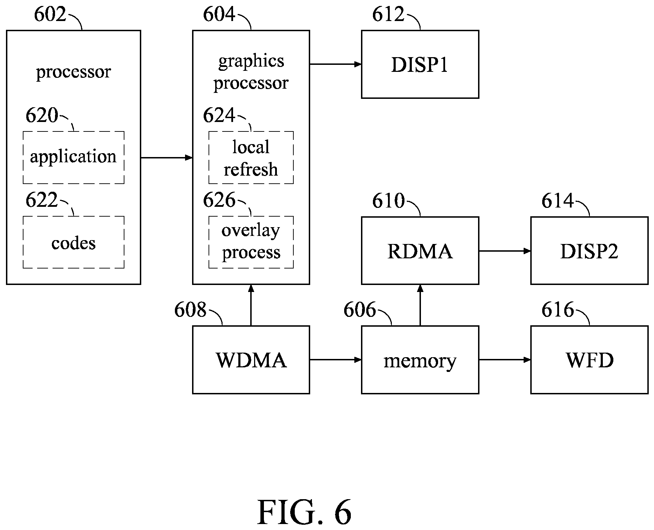

FIG. 6 shows a schematic diagram of an electronic device 600 in accordance with some embodiments of the present invention. As shown in FIG. 6, the electronic device 600 includes a processor 602, a graphics processor 604, a memory 606, a write direct memory access (WDMA) component 608, a read direct memory access (RDMA) 610, and a first display (DISP1) 612. Preferably, the electronic device 600 may be a smart phone, a tablet, or a laptop, but the present invention is not limited thereto. The processor 602 is electrically connected to the graphics processor 604. The first display 612 is electrically connected to the graphics processor 604. The WDMA 608 is electrically connected between the graphics processor 604 and the memory 606. The RDMA 610 is electrically connected between the second display 614 and the memory 606. The second display 614 is electrically connected to the RDMA 610. The third display 616 is electrically connected to the memory 606.

Preferably, an application 620 is executed on the processor 602. Codes 622 is executed on the processor 602, so that the processor is configured to perform the following operations. The processor 602 receives a plurality of image layers from the application 620, collects processing information, and determines whether to enable a local refresh function 624 of the graphics processor 604. When the local refresh function 624 is enabled, an overlay process is set to be used for the image layers. If it is determined that the local refresh function 624 of the graphic processor should not be enabled, an original display process is used. The processing information includes a first image format of an overlapped image output by the graphics processor 604 and a dirty region of the image layers.

The graphics processor 604 changes the first image format of the overlapped image to a second image format when the overlay process is set to be used for the image layers. The data size of the second image format is less than that of the first image format. For example, the data size of the first image format may be 32 bits, and the data size of the second image format may be 24 bits, but the present invention is not limited thereto. The graphics processor 604 performs an overlay process 626 on the image layers to output the overlapped image with the second image format, and refreshes the dirty region of the overlapped image.

Preferably, the processing information includes display information, layer information of the image layers, and the output information. The processor 602 determines whether the layer information of the image layers of the previous N frames has changed. N could be any integer greater than or equal to 2. The upper limit of N can be flexibly set according to system requirements (such as memory and processing power). The present invention has no special restrictions on this. For example, N is equal to 10. The processor 602 determines whether the dirty region occupies a smaller area than the threshold percentage in the image layers. Preferably, the threshold percentage may be 20%, but the present invention is not limited thereto. Preferably, the display information includes a display count and a display size. The layer information of the image layers includes a layer count, a layer size, the dirty region, a layer alpha, a layer position, and a layer name. The output information includes the image format of the overlapped image output by the graphics processor 604.

Preferably, the first image format of the overlapped image includes red, green, blue, and alpha. The second image format of the overlapped image comprises red, green, and blue. Preferably, the processor 602 enables the graphics processor 604 to perform the overlay process on the image layers when the overlay process is set to be used for the image layers. In detail, the processor 602 enables the graphics processor 604 to perform the overlay process on the image layers by setting a layer composition type as a client.

Preferably, the processor 602 enables the local refresh function of the graphics processor 604 when the layer information of the image layers of the previous N frames has not changed and when the dirty region occupies a smaller area than the threshold percentage in the image layers.

Preferably, the WDMA component 608 stores the overlapped image with the second image format in the memory 606. The RDMA component 610 reads the overlapped image with the second image format from the memory 606. The graphics processor 604 refreshes the dirty region of the overlapped image until the layer information of the image layers of the previous N frames has changed or the dirty region occupies a larger area than the threshold percentage in the image layers.

The method to overlap the image layers and the electronic device 600 of the present invention reduces million instructions per second (MIPS) during overlapping the image layers from the application by reducing the data size of image layers, thereby reducing bandwidth usage and memory usage.

According to the abovementioned methods, by converting the overlapped image from the first image format (e.g., 32 bits) to the second image format (e.g., 24 bits), the data size is significantly reduced. This helps in lowering bandwidth usage and memory consumption, thereby improving system efficiency. Reducing the image data size decreases the number of instructions per second (MIPS) required by the graphic processor to perform the overlay process. This results in faster task completion and overall system performance improvement. The methods allow for dynamic enabling or disabling of the local refresh function based on changes in layer information and the size of dirty region. This flexibility ensures that the system can optimize performance based on actual usage scenarios.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method to overlap a plurality of image layers, comprising:
receiving the image layers from an application (S100);
collecting processing information; wherein the processing information comprises a first image format of an overlapped image output by a graphics processor and a dirty region of the image layers (S102);
determining whether to enable a local refresh function of the graphics processor (S104);
setting an overlay process to be used for the image layers when it is determined to enable the local refresh function of the graphics processor (S106);
changing the first image format of the overlapped image to a second image format; wherein data size of the second image format is less than that of the first image format (S108);
performing the overlay process on the image layers to output the overlapped image with the second image format (S110); and
refreshing the dirty region of the overlapped image (S112).

2. The method as claimed in claim 1, wherein the processing information comprises display information and layer information of the image layers; the step of determining whether to enable the local refresh function of the graphics processor (S104), comprises:
determining whether the layer information of the image layers of the previous N frames has changed, wherein N is an integer greater or equal to 2 (S200); and
determining whether the dirty region occupies a smaller area than a threshold percentage in the image layers (S202).

3. The method as claimed in claim 2, wherein the display information comprises a display count and a display size; and the layer information of the image layers comprises a layer count, a layer size, the dirty region, a layer alpha, a layer position, and a layer name.

4. The method as claimed in any one of claims 1 to 3, wherein the first image format of the overlapped image comprises red, green, blue, and alpha; and the second image format of the overlapped image comprises red, green, and blue.

5. The method as claimed in any one of claims 1 to 4, further comprising:
enabling the graphics processor to perform the overlay process on the image layers when the overlay process is set; and
enabling the graphics processor to perform the overlay process on the image layers by setting a layer composition type as a client.

6. The method as claimed in claim 2 or 3, or as claimed in claim 4 or 5 being directly or indirectly dependent on claim 2, further comprising:
enabling the local refresh function of the graphics processor in response to the layer information of the image layers of the previous N frames not being changed and the dirty region occupying less than the threshold percentage in the image layers, wherein N is an integer greater or equal to 2.

7. The method as claimed in claim 2, 3 or 6, or as claimed in claim 4 or 5 being directly or indirectly dependent on claim 2, wherein the step of refreshing the dirty region of the overlapped image comprises:
refreshing the dirty region of the overlapped image until the layer information of the image layers of the previous N frames has changed or the dirty region occupies a larger area than the threshold percentage in the image layers, wherein N is an integer greater or equal to 2.

8. An electronic device (600), comprising:
a graphics processor (604); and
a processor (602), electrically connected to the graphics processor (604), configured to receive a plurality of image layers from an application (620), collect processing information, determine whether to enable a local refresh function (624) of the graphics processor (604); wherein the processing information comprises a first image format of an overlapped image output by the graphics processor (604) and a dirty region of the image layers;
wherein the graphics processor (604) is configured to set an overlay process (626) to be used for the image layers when it is determined to enable the local refresh function (624) of the graphics processor (604), and change the first image format of the overlapped image to a second image format; wherein the data size of the second image format is less than that of the first image format;
wherein the graphics processor (604) is configured to perform the overlay process (626) on the image layers to output the overlapped image with the second image format, and refresh the dirty region of the overlapped image.

9. The electronic device (600) as claimed in claim 8, wherein the processing information comprises display information and layer information of the image layers; the processor (602) is configured to determine whether the layer information of the image layers of the previous N frames has changed, N is an integer greater or equal to 2, and determine whether the dirty region occupies a smaller area than the threshold percentage in the image layers.

10. The electronic device (600) as claimed in claim 9, wherein the display information comprises a display count and a display size; the layer information of the image layers comprises a layer count, a layer size, the dirty region, a layer alpha, a layer position, and a layer name.

11. The electronic device (600) as claimed in any one of claims 8 to 10, wherein the first image format of the overlapped image comprises red, green, blue, and alpha; and the second image format of the overlapped image comprises red, green, and blue.

12. The electronic device (600) as claimed in any one of claims 8 to 11, wherein the processor is configured to enable the graphics processor to perform the overlay process on the image layers when the overlay process is set, and enable the graphics processor to perform the overlay process on the image layers by setting a layer composition type as a client.

13. The electronic device (600) as claimed in any one of claims 8 to 12, further comprising:
a memory (606);
a write direct memory access, in the following also referred to as WDMA, component (608), electrically connected between the graphics processor (604) and the memory (606), configured to store the overlapped image with the second image format in the memory (606); and
a read direct memory access, in the following also referred to as RDMA, component (610), electrically connected to the memory (606), configured to read the overlapped image with the second image format from the memory (606).

14. The electronic device (600) as claimed in claim 9 or 10, or as claimed in any one of claims 11 to 13 being directly or indirectly dependent on claim 9, wherein the processor (602) is configured to enable the local refresh function of the graphics processor (604) in response to the layer information of the image layers of the previous N frames not being changed, N is an integer greater or equal to 2, and the dirty region occupying less than the threshold percentage in the image layers.

15. The electronic device (600) as claimed in claim 9, 10 or 14, or as claimed in any one of claims 11 to 13 being directly or indirectly dependent on claim 9, wherein the graphics processor (604) is configured to refresh the dirty region of the overlapped image until the layer information of the image layers of the previous N frames has changed or the dirty region occupies a larger area than the threshold percentage in the image layers, wherein N is an integer greater or equal to 2.
